# EUROPEAN PATENT APPLICATION

(11) **EP 4 624 280 A1**
(43) Date of publication of application: **01.10.2025**
(21) Application number: 24221678.6
(22) Date of filing: 19.12.2024
(51) Int. Cl.: B60R 25/30, B60R 25/104, B60R 25/31

(54) **VEHICLE SAFETY WARNING METHOD AND DEVICE, AND STORAGE MEDIUM**

(30) Priority: 25.03.2024 CN 202410346864
(71) Applicant: Nio Technology (Anhui) Co., Ltd, Hefei City, Anhui 230601 (CN)
(72) Inventor: MA, Mingming, Shanghai (CN); GAO, Ruilian, Shanghai (CN)
(74) Representative: Vossius & Partner Patentanwälte Rechtsanwälte mbB

(57) **Abstract**

The present application discloses a vehicle safety warning method, a vehicle safety warning device, and a storage medium, and relates to the technical field of vehicle safety. The vehicle safety warning method disclosed by the present application includes: obtaining a vibration sensor signal and an image sensor signal, and obtaining a detection result of a surrounding environment of vehicle based on the image sensor signal; determining a warning mode based on the vibration sensor signal and the detection result of the surrounding environment of the vehicle; and performing vehicle safety warning based on the warning mode. The method provided by the present application can effectively improve the accuracy of vehicle warning and ensure the safety of vehicle in the guard mode.

## Description

### FIELD OF THE INVENTION

The present application relates to the technical field of vehicle safety, and in particular to a vehicle safety warning method, a vehicle safety warning device, and a storage medium.

### BACKGROUND OF THE INVENTION

In a guard mode, the vehicle automatically monitors dangerous situations around the vehicle when in a parking mode. When a dangerous situation is monitored, the situation around the vehicle is automatically recorded. As to how to determine a dangerous situation, an acceleration sensor is often used in the prior art to identify dangerous scenes. When the acceleration sensor detects a vibration signal, a camera is triggered to start recording the image around the vehicle and send an alarm. However, in this situation, the camera is usually triggered to start recording after the vehicle is hit, which has the problem that the time of occurrence cannot be recorded. There are also situations where slight scratches cannot trigger the acceleration sensor and cannot be recorded since a relatively large force is required to trigger the acceleration sensor. Therefore, there may be many missed alarms.

For this purpose, the present application aims to propose a vehicle safety warning solution that can improve the accuracy of vehicle warning.

### SUMMARY OF THE INVENTION

In order to overcome the above defects, the vehicle safety warning method, vehicle safety warning device and storage medium proposed in the present application can solve the safety problems in the parking mode of the vehicle.

In a first aspect, the present application provides a vehicle safety warning method, which includes:
obtaining a vibration sensor signal and an image sensor signal, and obtaining a detection result of a surrounding environment of vehicle based on the image sensor signal;
determining a warning mode based on the vibration sensor signal and the detection result of the surrounding environment of the vehicle; and
performing vehicle safety warning based on the warning mode.

Preferably, the determining a warning mode based on the vibration sensor signal and the detection result of the surrounding environment of the vehicle specifically includes:
if it is determined based on the vibration sensor signal that the vehicle is in danger, then determining the warning mode as a first warning mode; and
if it cannot be determined that the vehicle is in danger based on the vibration sensor signal, then judging whether the vehicle is in danger based on the detection result of the surrounding environment of the vehicle: if the vehicle is in danger, then determining the warning mode as a second warning mode; and if the vehicle is not in danger, then performing no warning.

Preferably, the method further includes:
calculating the confidence level of the signal based on the vibration sensor signal; and
judging whether it can be determined that the vehicle is in danger based on the vibration sensor signal, according to the confidence level of the signal.

Preferably, the judging whether it can be determined that the vehicle is in danger based on the vibration sensor signal according to the confidence level of the signal specifically includes:
judging whether the confidence level of the signal exceeds a first preset threshold: if yes, it is determined that the vehicle is in danger based on the vibration sensor signal; and if not, it cannot be determined that the vehicle is in danger based on the vibration sensor signal.

Alternatively, the judging whether it can be determined that the vehicle is in danger based on the vibration sensor signal according to the confidence level of the signal specifically includes:
judging whether the confidence level of the signal exceeds a first preset threshold;
if yes, determining that the vehicle is in danger based on the vibration sensor signal; and
if not, judging whether the confidence level of the vibration signal is lower than a second preset threshold: if yes, it is determined that the vehicle is not in danger; and if not, it cannot be determined that the vehicle is in danger based on the vibration sensor signal.

Preferably, the performing vehicle safety warning based on the warning mode includes performing at least one of the following operations: emitting an alarm sound, turning on vehicle lights, illuminating the central control screen, saving video images obtained based on the image sensor signal, and sending an alarm notification to the vehicle owner.

Preferably, the obtaining a detection result of a surrounding environment of vehicle based on the image sensor signal specifically includes: using the image sensor signal as the input of a neural network detection model to obtain the output detection result of the surrounding environment of the vehicle, which includes a target object and its position.

Preferably, the method further includes:
obtaining a position change of the target object in adjacent video frame images based on the target object and its position; judging whether there is a moving target object around the vehicle based on the position change of the target object; if yes, determining that the vehicle is in danger based on the detection result of the surrounding environment of the vehicle; and if not, determining that the vehicle is not in danger based on the detection result of the surrounding environment of the vehicle.

In a second aspect, the present application provides an electronic device, which includes a processor and a storage device; the storage device is adapted to store multiple program codes, and the program codes are adapted to be loaded and run by the processor to execute the vehicle safety warning method described in any one of the technical solutions of the above vehicle safety warning method.

In a third aspect, the present application provides a computer-readable storage medium, on which multiple program codes are stored; the program codes are adapted to be loaded and run by a processor to execute the vehicle safety warning method described in any one of the technical solutions of the above vehicle safety warning method.

The above one or more technical solutions of the present application at least have the following one or more advantageous effects.

When implementing the technical solutions of the present application, the vibration sensor signal and the image sensor signal are obtained first, and the detection result of the surrounding environment of the vehicle is obtained based on the image sensor signal; at the same time, based on the vibration sensor signal and the detection result of the surrounding environment of the vehicle, the warning mode is determined for performing vehicle safety warning. Compared with the prior art, the present application combines the vibration sensor signal and the detection result of the surrounding environment of the vehicle obtained based on the image sensor signal to judge whether warning is needed and determine the warning mode, which can provide a more reasonable judgment on whether the surrounding environment of the vehicle will cause danger to the vehicle, thus effectively improving the accuracy of vehicle warning and ensuring the safety of vehicle in the guard mode.

### BRIEF DESCRIPTION OF THE DRAWINGS

Referring to the accompanying drawings, the disclosed content of the present application will become easier to understand. It is easy for those skilled in the art to understand that these drawings are only for illustrative purpose, and are not intended to limit the scope of protection of the present application. In addition, similar numbers in the drawings are used to represent similar components, in which:
FIG. 1 is a schematic flowchart of main steps of a vehicle safety warning method according to an embodiment of the present application;
FIG. 2 is a schematic diagram of the implementation of a specific application scene of the vehicle safety warning method according to the embodiment of the present application; and
FIG. 3 is a schematic block diagram of the composition of a vehicle warning system according to an embodiment of the present application.

### DETAILED DESCRIPTION OF THE EMBODIMENT(S) OF THE INVENTION

Hereinafter, some embodiments of the present application will be described with reference to the accompanying drawings. It should be understood by those skilled in the art that these embodiments are only used to explain the technical principles of the present application, and are not intended to limit the scope of protection of the present application.

In the description of the present application, "module" and "processor" may include hardware, software, or a combination of both hardware and software. A module may include hardware circuits, various suitable sensors, communication ports, memories, and may also include software components such as program codes, or a combination of software and hardware. The processor can be a central processing unit, a microprocessor, an image processor, a digital signal processor, or any other suitable processor. The processor has data and/or signal processing functions. The processor can be implemented in software, hardware, or a combination of both software and hardware. Non-temporary computer-readable storage media include any suitable medium that can store program codes, such as magnetic disk, hard drive, optical disk, flash memory, read-only memory, random access memory, etc. The term "A and/or B" refers to all possible combinations of A and B, such as only A, only B, or A and B. The term "at least one A or B" or "at least one of A and B" has a similar meaning to "A and/or B" and can include only A, only B, or A and B. The singular form of term "one" and "this" may also include the plural form.

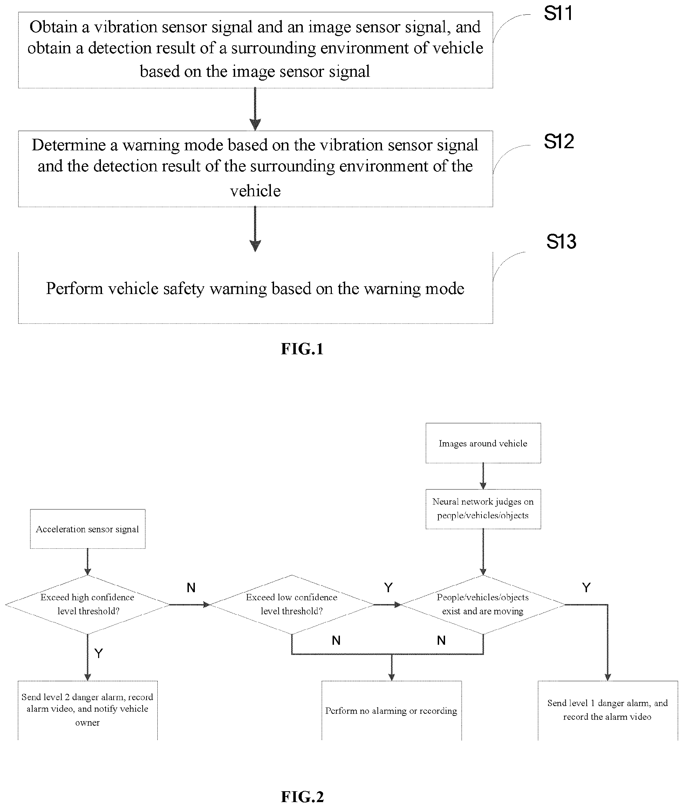

As shown in FIG. 1, which is a schematic flowchart of main steps of a vehicle safety warning method according to an embodiment of the present application, the vehicle safety warning method provided by the embodiment of the present application is mainly applied in application scenes where the vehicle is in the guard mode or parking mode. As shown in the figure, the vehicle safety warning method of the embodiment of the present application mainly includes the following steps S11 to S 13.

Step S 11: obtaining a vibration sensor signal and an image sensor signal, and obtaining a detection result of a surrounding environment of vehicle based on the image sensor signal.

In this embodiment, at least a vibration sensor and an image sensor are installed on the vehicle. For example, the vibration sensor can be an acceleration sensor, and the image sensor can be a camera. The vibration sensor can obtain a vibration sensor signal in real time, and the image sensor can obtain an image sensor signal in real time. It should be understood that the image sensor signal may be a video frame image.

In some embodiments, the obtaining a detection result of a surrounding environment of vehicle based on the image sensor signal specifically includes: using the image sensor signal as the input of a neural network detection model to obtain the output detection result of the surrounding environment of the vehicle, which includes a target object and its position. The neural network detection model described in this embodiment can be a neural network model in the prior art that can be used for target detection. This neural network detection model can detect and identify target objects such as people, vehicles and objects in the image and their positions based on the image input to the model.

Further, based on the target object and its position output by the neural network detection model, a position change of the target object in adjacent video frame images can be obtained. Based on this position change, it is judged whether there is a moving target object around the vehicle. When it is judged that there is a moving target object, it indicates that the vehicle is determined to be in danger based on the detection result of the surrounding environment of the vehicle. When it is judged that no moving target object is detected, it indicates that the vehicle is determined to be not in danger based on the detection result of the surrounding environment of the vehicle. It should be understood that when no moving target object is detected, it may indicate that no target object is detected, or that a target object is detected but it is in a stationary state.

In some embodiments, the obtaining a detection result of a surrounding environment of vehicle based on the image sensor signal may also specifically include: using the optical flow method to detect the image sensor signal to obtain the detection result of the surrounding environment of the vehicle: whether there is a moving target object. Specifically, the existing optical flow method can be used to detect whether the pixel position of the target object in adjacent video frame images has changed, and then determine whether there is a moving target object.

Step S12: determining a warning mode based on the vibration sensor signal and the detection result of the surrounding environment of the vehicle.

In this embodiment, based on both the vibration sensor signal and the detection result of the surrounding environment of the vehicle obtained from the image sensor signal, it is judged whether the vehicle is in danger, and when it is judged that the vehicle is in danger, a warning mode is determined. The warning mode may include emitting an alarm sound, controlling the central control screen to light up, saving video images obtained based on the image sensor signal, and sending an alarm notification to the vehicle owner. It should be understood that when determining the warning mode, it can be a combination of one or more of the above warning operations.

A specific implementation of this step is as follows:
if it is determined based on the vibration sensor signal that the vehicle is in danger, then determining the warning mode as a first warning mode; and
if whether the vehicle is in danger cannot be determined based on the vibration sensor signal, then judging whether the vehicle is in danger based on the detection result of the surrounding environment of the vehicle: if the vehicle is in danger, then determining the warning mode as a second warning mode; and if the vehicle is not in danger, then performing no warning.

The judging whether the vehicle is in danger based on the detection result of the surrounding environment of the vehicle specifically includes: judging whether there is a moving target object around the vehicle based on the detection result of the surrounding environment of the vehicle; if there is a moving target object, it indicates that the vehicle is in danger; otherwise, it indicates that the vehicle is not detected to be in danger, and no warning is performed.

In some embodiments, based on whether a vibration signal is detected, that is, whether the vibration sensor signal is obtained, it can be directly judged whether the vehicle can be determined to be in danger. Specifically, when a vibration signal is detected, it indicates that the vehicle is determined to be in danger based on the vibration sensor signal, and when no vibration signal is detected, it indicates that the vehicle cannot be determined to be in danger based on the vibration sensor signal.

In some embodiments, the method may also include: when a vibration sensor signal is detected, calculating the confidence level of the signal based on the vibration sensor signal; and judging whether it can be determined that the vehicle is in danger based on the vibration sensor signal, according to the confidence level of the signal.

Optionally, the calculating the confidence level of the signal based on the vibration sensor signal may specifically include: comparing the current detected vibration sensor signal value a with the average value b of the vibration sensor signals collected within a historical preset time period, and calculating the relative error value error, where error=|a-b|/b, and the confidence level of the signal is C=1-error. For example, an acceleration sensor is used as the vibration sensor, and the corresponding detected vibration sensor signal value is specifically the acceleration value. Based on the acceleration values collected within three seconds prior to the current time, the average acceleration value is calculated. The confidence level of the signal can be calculated based on the detected acceleration value and the average acceleration value.

Optionally, the judging whether it can be determined that the vehicle is in danger based on the vibration sensor signal according to the confidence level of the signal specifically includes:
judging whether the confidence level of the signal exceeds a first preset threshold: if yes, it is determined that the vehicle is in danger based on the vibration sensor signal; and if not, it cannot be determined that the vehicle is in danger based on the vibration sensor signal.

Optionally, the judging whether it can be determined that the vehicle is in danger based on the vibration sensor signal according to the confidence level of the signal may also specifically include:
judging whether the confidence level of the signal exceeds a first preset threshold;
if yes, determining that the vehicle is in danger based on the vibration sensor signal; and
if not, judging whether the confidence level of the vibration signal is lower than a second preset threshold: if yes, it is determined that the vehicle is not in danger; and if not, it cannot be determined that the vehicle is in danger based on the vibration sensor signal.

For example, the first preset threshold is 0.4, and the second preset threshold is 0.2.

Step S13: performing vehicle safety warning based on the warning mode.

In this embodiment, specifically, the performing vehicle safety warning based on the warning mode includes performing at least one of the following operations: emitting an alarm sound, turning on vehicle lights, illuminating the central control screen, saving video images obtained based on the image sensor signal, and sending an alarm notification to the vehicle owner.

It should be understood that according to the different warning modes determined in step S12, different operations of the vehicle safety warning corresponding to the warning modes can be set in advance for execution. The corresponding operations can be set according to the different danger levels warned by the warning modes. For example, the danger level warned by the first warning mode is higher than that warned by the second warning mode; if the warning mode determined in step S12 is the first warning mode, then the corresponding step S13 is executed: emitting the alarm sound, recording the video images, and sending the alarm notification to the vehicle owner; and if the warning mode determined in step S12 is the second warning mode, then the corresponding step S13 is executed: emitting the alarm sound and recording the video images. In addition, different warning modes can be distinguished by setting different alarm sounds, and the recorded video images can be distinguished and saved according to different warning modes. When it is detected in step S12 that no warning is needed, the collected video images are deleted in a timely manner, thereby achieving effective management of the recorded video images.

Reference is made to FIG. 2, which is a schematic diagram of a specific implementation of the vehicle safety warning method provided by the present application in a specific application scene. In this specific application scene, an acceleration sensor and at least one camera are installed on the vehicle. The acceleration sensor is used to detect the acceleration sensor signal, and the camera can be used to collect and obtain images around the vehicle. The vehicle safety warning method provided in this embodiment accurately judges the dangerous situations in the surrounding environment of the vehicle based on the acceleration sensor signal and the images around the vehicle, distinguishes the dangerous situations into different danger levels according to the judgment results, and sets warning operations corresponding to different danger levels.

In this embodiment, specifically, the acceleration sensor signal and the images around the vehicle are collected in real time through the acceleration sensor and the camera, and the neural network makes judgment on people/vehicles/objects in the images around the vehicle. Based on the detected acceleration sensor signal, it is first judged whether it exceeds a high confidence level threshold. If the high confidence level threshold is exceeded, a level 2 danger alarm is sent, and the alarm video is recorded to notify the vehicle owner. For example, the vehicle owner can be notified by sending a text message, or sending a notification message through an APP. If the high confidence level threshold is not exceeded, it is judged whether a low confidence level threshold is exceeded. If the low confidence level threshold is not exceeded, there will be no alarming or recording. If the low confidence level threshold is exceeded, further judgment will be made based on the results of the neural network's above judgment on people/vehicles/objects in the images around the vehicle to judge whether people/vehicles/objects exist and whether they are moving. If yes, a level 1 danger alarm will be sent and the alarm video will be recorded. Otherwise, there will be no alarming or recording. The level 1 danger alarm is a lower-level alarm mode compared to the level 2 danger alarm. Recording the alarm video refers to saving the video images collected by the camera. There is no need to save the video images collected by the camera if the video images will not be recorded. That is, after determining whether to send the alarm, the video images collected during the corresponding time period should be deleted in a timely manner, thus achieving the effect of efficiently utilizing the image storage space. It should be understood that in the above implementation, if no acceleration sensor signal is detected based on the acceleration sensor, but the neural network makes judgment on people/vehicles/objects based on the images around the vehicle and the judgment result is that people/vehicles/objects exist and they are moving, then the level 1 danger alarm will be sent and the alarm video will be recorded.

It can be understood that the settings for the high confidence level threshold, the low confidence level threshold, the danger levels, and the warning operations corresponding to various danger levels may vary depending on the actual application scenes.

Further, the present application also provides a vehicle safety warning system.

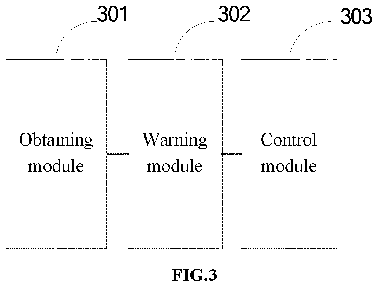

Referring to FIG. 3, which is a main structural block diagram of the vehicle safety warning system according to an embodiment of the present application, the system mainly includes:
an obtaining module 301, which is configured to obtain a vibration sensor signal and an image sensor signal, and obtain a detection result of a surrounding environment of vehicle based on the image sensor signal;
a warning module 302, which is configured to determine a warning mode based on the vibration sensor signal obtained by the obtaining module 301 and the detection result of the surrounding environment of the vehicle; and
a control module 303, which is configured to perform vehicle safety warning based on the warning mode determined by the warning module 302.

For ease of explanation, the above introduction to the vehicle safety warning system only shows the parts related to the embodiments of the present application. For specific technical details not disclosed, reference may be made to the parts of the method of the embodiment of the present application.

It should be understood that since the settings of various modules are only for illustrating the functional units of the present application, the physical device corresponding to these modules can be the processor itself, or a part of the software, a part of the hardware, or a part of the combination of software and hardware in the processor. Therefore, the number of various modules in the figure is only illustrative.

It can be understood by those skilled in the art that the various modules in the system can be adaptively split or merged. The splitting or merging of specific modules will not cause the technical solutions to deviate from the principles of the present application; therefore, the technical solutions after splitting or merging will all fall within the scope of protection of the present application.

It can be understood by those skilled in the art that the implementation of all or part of the process in the method of the above embodiment in the present application can also be completed by instructing relevant hardware through a computer program. The computer program can be stored in a computer-readable storage medium, and when executed by a processor, the computer program can implement the steps of the above method embodiments. The computer program includes computer program codes, which can be in the form of source codes, object codes, executable files, or some intermediate forms. The computer-readable storage medium may include any entity or device capable of carrying the computer program codes, medium, USB flash drive, portable hard disk, magnetic disk, optical disk, computer memory, read-only memory, random access memory, electric carrier signal, telecommunication signal, and software distribution medium, etc. It should be noted that the content contained in the computer-readable storage medium can be appropriately added or deleted according to the requirements of legislation and patent practice within the jurisdiction. For example, in some jurisdictions, according to legislation and patent practice, the computer-readable storage medium does not include electric carrier signals and telecommunications signals.

Further, the present application also provides an electronic device.

In an embodiment of the electronic device according to the present application, the electronic device mainly includes a processor and a storage device. The storage device may be configured to store a program for executing the vehicle safety warning method of the method embodiment described above, and the processor may be configured to execute the program in the storage device, including but not limited to a program for executing the vehicle safety warning method of the method embodiment described above. For ease of explanation, only the parts related to the embodiments of the present application are shown. For specific technical details not disclosed, reference may be made to the parts of the method of the embodiment of the present application.

In the embodiment of the present application, the electronic device may be a control device including various electronic devices. In some possible implementations, the electronic device may include multiple storage devices and multiple processors. The program for executing the vehicle safety warning method of the above method embodiment can be divided into multiple subprograms, each of which can be loaded and run by the processor respectively to execute different steps of the vehicle safety warning method of the above method embodiment. Specifically, each subprogram can be stored in different storage devices respectively, and each processor can be configured to execute programs in one or more storage devices to jointly implement the vehicle safety warning method of the above method embodiment. That is, each processor executes different steps of the vehicle safety warning method of the above method embodiment respectively to jointly implement the vehicle safety warning method of the above method embodiment.

The above-mentioned multiple processors can be processors deployed on the same device; for example, the above-mentioned electronic device can be a high-performance device composed of multiple processors, and the above-mentioned multiple processors can be processors deployed on the high-performance device. In addition, the above-mentioned multiple processors can also be processors deployed on different devices; for example, the above-mentioned electronic device can be a server cluster, and the above-mentioned multiple processors can be processors on different servers in the server cluster.

Further, the present application also provides a computer-readable storage medium.

In an embodiment of the computer-readable storage medium according to the present application, the computer-readable storage medium may be configured to store a program for executing the vehicle safety warning method of the method embodiment described above, and the program can be loaded and run by a processor to implement the vehicle safety warning method described above. For ease of explanation, only the parts related to the embodiments of the present application are shown. For specific technical details not disclosed, reference may be made to the parts of the method of the embodiment of the present application. The computer-readable storage medium may be a storage device including various electronic devices, and optionally, the computer-readable storage medium in the embodiment of the present application is a non-temporary computer-readable storage medium.

The relevant user personal information that may be involved in each embodiment of the present application is actively provided by users during the use of products/services or generated due to the use of products/services, and obtained through user authorization strictly in accordance with the requirements of laws and regulations, following the principles of legality, legitimacy and necessity, and based on the reasonable purpose of the business scene.

The user personal information processed in the present application may vary depending on the specific product/service scene, and should be in accordance with the specific scene in which the user uses the product/service. It may involve the user's account information, device information, driving information, vehicle information, or other relevant information. The applicant will treat the user's personal information and its processing with a high degree of diligence.

The present application attaches great importance to the security of user personal information, and has taken reasonable and feasible security measures that comply with industry standards to protect user information and prevent unauthorized access, public disclosure, use, modification, damage or loss of the personal information.

Hitherto, the technical solutions of the present application have been described in connection with the preferred embodiments shown in the accompanying drawings, but it is easily understood by those skilled in the art that the scope of protection of the present application is obviously not limited to these specific embodiments. Without departing from the principles of the present application, those skilled in the art can make equivalent changes or replacements to relevant technical features, and all the technical solutions after these changes or replacements will fall within the scope of protection of the present application.

## Claims

1. A vehicle safety warning method, comprising:
obtaining a vibration sensor signal and an image sensor signal, and obtaining a detection result of a surrounding environment of vehicle based on the image sensor signal;
determining a warning mode based on the vibration sensor signal and the detection result of the surrounding environment of the vehicle; and
performing vehicle safety warning based on the warning mode.

2. The method according to claim 1, wherein the determining a warning mode based on the vibration sensor signal and the detection result of the surrounding environment of the vehicle specifically comprises:
if it is determined based on the vibration sensor signal that the vehicle is in danger, then determining the warning mode as a first warning mode; and
if it cannot be determined that the vehicle is in danger based on the vibration sensor signal, then judging whether the vehicle is in danger based on the detection result of the surrounding environment of the vehicle: if the vehicle is in danger, then determining the warning mode as a second warning mode; and if the vehicle is not in danger, then performing no warning.

3. The method according to claim 1 or 2, further comprising:
calculating the confidence level of the signal based on the vibration sensor signal; and
judging whether it can be determined that the vehicle is in danger based on the vibration sensor signal, according to the confidence level of the signal.

4. The method according to claim 3, wherein the judging whether it can be determined that the vehicle is in danger based on the vibration sensor signal according to the confidence level of the signal specifically comprises:
judging whether the confidence level of the signal exceeds a first preset threshold: if yes, it is determined that the vehicle is in danger based on the vibration sensor signal; and if not, it cannot be determined that the vehicle is in danger based on the vibration sensor signal.

5. The method according to claim 3 or 4, wherein the judging whether it can be determined that the vehicle is in danger based on the vibration sensor signal according to the confidence level of the signal specifically comprises:
judging whether the confidence level of the signal exceeds a first preset threshold;
if yes, determining that the vehicle is in danger based on the vibration sensor signal; and
if not, judging whether the confidence level of the vibration signal is lower than a second preset threshold: if yes, it is determined that the vehicle is not in danger; and if not, it cannot be determined that the vehicle is in danger based on the vibration sensor signal.

6. The method according to any one of claims 1 to 5, wherein the performing vehicle safety warning based on the warning mode comprises performing at least one of the following warning operations: emitting an alarm sound, turning on vehicle lights, illuminating the central control screen, saving video images obtained based on the image sensor signal, and sending an alarm notification to the vehicle owner.

7. The method according to any one of claims 1 to 6, wherein the obtaining a detection result of a surrounding environment of vehicle based on the image sensor signal specifically comprises: using the image sensor signal as the input of a neural network detection model to obtain the output detection result of the surrounding environment of the vehicle, which comprises a target object and its position.

8. The method according to claim 7, further comprising:
obtaining a position change of the target object in adjacent video frame images based on the target object and its position; judging whether there is a moving target object around the vehicle based on the position change of the target object; if yes, determining that the vehicle is in danger based on the detection result of the surrounding environment of the vehicle; and if not, determining that the vehicle is not in danger based on the detection result of the surrounding environment of the vehicle.

9. An electronic device, comprising a processor and a storage device which is adapted to store multiple program codes, wherein the program codes are adapted to be loaded and run by the processor to execute the vehicle safety warning method according to any one of claims 1 to 8.

10. A computer-readable storage medium, on which multiple program codes are stored, wherein the program codes are adapted to be loaded and run by a processor to execute the vehicle safety warning method according to any one of claims 1 to 8.
